**Europäisches Patentamt**

**European Patent Office**

**Office européen des brevets**

(19)

(11) Publication number: **0 069 164**
**A1**

(12) # EUROPEAN PATENT APPLICATION

(21) Application number: **81105272.9**

(22) Date of filing: **08.07.81**

(51) Int. Cl.³: **B 60 R 1/06**

(43) Date of publication of application:
**12.01.83** Bulletin **83/2**

(84) Designated Contracting States:
**AT CH DE FR GB LI**

(71) Applicant: **Abbondanti, Clemente**
**Via della Repubblica, 38**
**I-48010 Fusignano (Ravenna)(IT)**

(72) Inventor: **Abbondanti, Clemente**
**Via della Repubblica, 38**
**I-48010 Fusignano (Ravenna)(IT)**

(54) **Nonfogging rearview outside mirror for motor-driven vehicles.**

(57) The mirror body is provided with an inside collector (7) having a progressive tapering into which air is injected by effect of the vehicle motion through a rear grid (5) taking, when advancing, a power increase to get out as an air jet with continuous effect sidewise on the mirror (4). The air jet aiming is performed by a deviation relief (9) on the mirror which permits to project the jet with grazing effect, thus allowing to remove the water particle formed on the wall (4).

FIG.1

EP 0 069 164 A1

- I -

Nonfogging · rearview outside mirror for motor-driven vehicles.

The invention refers to a demisting device allowing to maintain the functionality of the rearview mirrors in the motor-driven vehicles even in presence of fog and rain, by using the atmosphe re air to generate an air jet with continuous grazing effect on the visualization wall and performing the removal of the water particles. The functionality of the rearview mirror is indispen sable for the efficient drive of the motor vehicle since it allows to watch the traffic on the surpassing side.

At present there are no means known performing cleaning of the visualisation wall in transit condition, and this implies the necessity of doing so by the driver while he is driving. Moreover the dimming that occurs in presence of fog or rain takes place in precarious conditions for the driver, namely when the utmost necessity occurs to have the rearview mirror in efficient conditions.

According to the invention, the proceeding permits the integral solution of the problem by means of a contrivance that uses the vehicle movement to generate an air jet with continuous effect performing in this way the removal of the water particles form ed on the visualization walls. This is possible thanks to the envelope inside fitted with a conversion collector with progres sive tapering towards the outlet into which the air is injected by effect of the vehicle movement, through the grid fitted on
the rear wall on which the air is hitting. In the said collect-
or, the air takes a prograssive power increase which permits a
jet outlet. This is aimed sidewise at the visualisation wall by
the deviation relief foreseen on the frame. In this way, when the
car is running, the invention permits to remove the water particles from the mirror with continuous grazing effect.

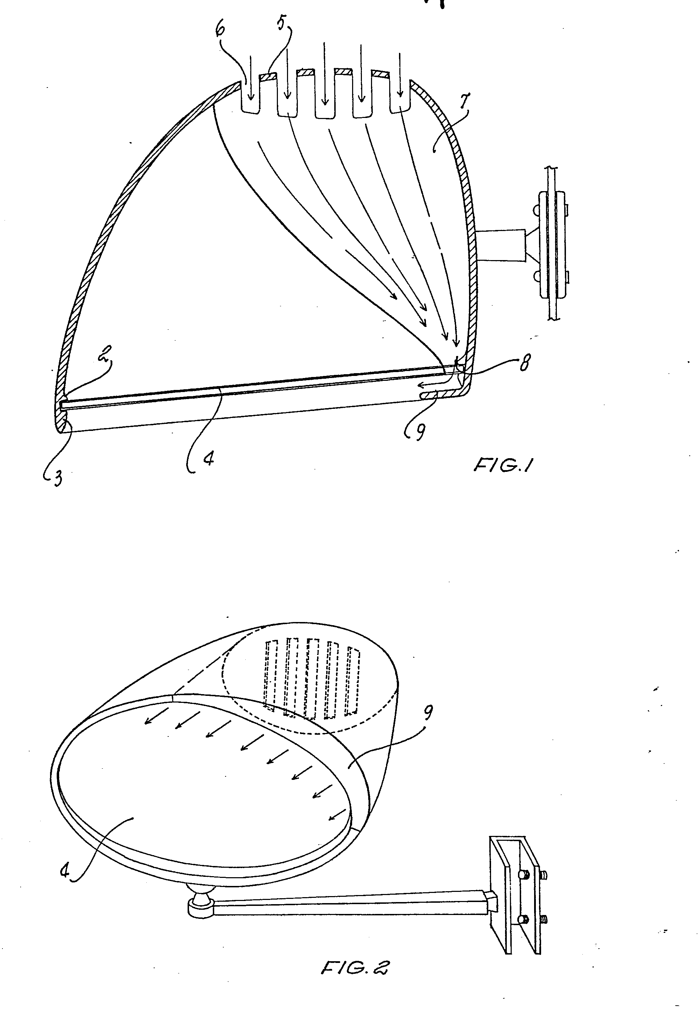

An execution version is ilustrated in an indicative way the drawi
ings of Table I, where Fig. I is the mirror section showing the
conversion collector with direction arrows indicating the air pas
sage from the grid in progressive tapering of the duct on the ou
tlet opening on the mirror wall and employ of the deflector bear
ing the jet with grazing effect on the mirror wall. Fig. 2 is the
prospectic view of a mirror showing the dashed grid on the rear
wall and the conversion collector. The version foresees envelope
I bearing the mirror plate 4 on stabilizing reliefs 2 and 3. The
system foresees grid 5 with parallel openings 6 which introduces
air into conversion collector 7 with opening 8, through which the
air jet hits on relief of deflection 9 and gets on the wall 4 wi
th grazing effect.

Practically, the particular of the execution, the mirror body fo
rm, that of the grid and of the conversion collector may be differently be carried out. In an analoguous way, the aiming of the
air jet may be foreseen differently. The device may be fitted on
the car body in many ways.

CLAIMS:

I)Nonfogging rearview mirror for motor-driven vehicles,characterized by the fact the envelope is foreseen with an inside conversion collector having a progressive tapering towards the outlet,in which the air is injected by effect of the vehicle motion,through a grid fitted on the rear side on which the air hits. In this collector,the air progressively takes a power increase which permits its jet outlet.This one is aimed sidewise on the visualization wall by effect of the deflection relief foreseen on the frame.In this way,while the car is running,the invention permits to determine a continuous jet with grazing effect capable of removing the water particles from the mirror.

2)Nonfogging rearview mirror for motor-driven vehicles,according to the above claim,characterized by the fact that the version foresees envelope I bearing the mirror plate 4 on stabilizing reliefs 2 and 3.The system foresees grid 5 with parallel openings 6 which internally lets the air into conversion collector 7 with opening 8,through which tha air jet hits on deviation projection 9 and arrives with grazing effect on the visualization wall 4.

3)Nonfogging outer rearview mirror for motor-driven vehicles,according to the previous claims,characterized by the fact that the employ of the conversion collector 7,with progressive section reduction,allows a power increase to the outgoing air jet.

4)Nonfogging outer rearview mirror for motor-driven vehicles,according to the previous claims,characterized by the fact that the grazing effect on the wall of visualization is enabled by the deviation angle 9.

5)Execution forms as described and illustrated by the drawing of Table I.

0069164

¹/₁

FIG.1

FIG.2

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE – U1 – 8 030 528 (K.-H. VON HOLTEN) <br> * complete document * <br> –– | 1-5 | B 60 R 1/06 |
| | GB – A – 1 515 934 (VAUXHALL MOTORS) <br> * fig. * <br> –– | 1 | |
| | GB – A – 2 048 191 (BRITAX) <br> * fig. 3 * <br> –– | 1 | |
| | US – A – 2 796 506 (R.N. LUMBERT) <br> * fig. 2 * <br> –– | 1 | |
| | US – A – 3 059 540 (S. ROBINSON) <br> * fig. 2 * <br> –––– | 1 | B 60 R 1/00 |

**TECHNICAL FIELDS SEARCHED (Int. Cl.³)**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 12-01-1982 | BECKER |

EPO Form 1503.1  06.78